Europäisches Patentamt

European Patent Office

Office européen des brevets

(19)

(11) Publication number: **0 008 146**
**B1**

(12) **EUROPEAN PATENT SPECIFICATION**

(45) Date of publication of patent specification: **13.04.83**

(21) Application number: **79200425.1**

(22) Date of filing: **30.07.79**

(51) Int. Cl.³: **C 09 J 3/14, C 08 L 51/00,**
**C 08 L 53/02,**
**C 08 F 287/00,**
**C 08 F 291/00**

(54) Radiation cured adhesive composition.

(30) Priority: **14.08.78 US 933218**

(43) Date of publication of application:
**20.02.80 Bulletin 80/4**

(45) Publication of the grant of the patent:
**13.04.83 Bulletin 83/15**

(84) Designated Contracting States:
**AT BE CH DE FR GB IT NL SE**

(56) References cited:
**EP - A - 0 004 102**
**FR - A - 2 176 877**
**GB - A - 1 002 438**
**US - A - 4 007 311**

(73) Proprietor: **SHELL INTERNATIONALE RESEARCH**
**MAATSCHAPPIJ B.V.**
**Carel van Bylandtlaan 30**
**NL-2596 HR Den Haag (NL)**

(72) Inventor: **St. Clair, David John**
**c/o Shell Development Company Westhollow**
**Research**
**P.O. Box 1380 Houston, Texas 77001 (US)**
Inventor: **Hansen, David Romme**
**15918 Red Willow Drive**
**Houston, Texas 77084 (US)**

(74) Representative: **Puister, Antonius Tonnis, Mr. et al,**
**P.O. Box 302**
**NL-2501 CH The Hague (NL)**

Courier Press, Leamington Spa, England.

Radiation cured adhesive composition

Thermoplastic elastomeric block copolymers have been proposed in the past to produce adhesive compositions, for example U.S.P. 3,239,478 discloses combinations of these block copolymers with tackifying resins and paraffinic extending oils. Limitations of these adhesive compositions are their relatively low service temperatures and their poor solvent resistance and for a number of applications it would be advantageous to have higher service and better solvent resistance temperatures. For example, these adhesives would be useful in paint shops if the masking tapes produced had good solvent resistance and a 105—120°C service temperature. They would also be useful as laminating adhesives in food pouches if they could withstand boiling water temperatures and as furniture laminating adhesives if they could bear moderate loads at 120°C.

One means to improve the service temperature of block copolymer adhesive compositions is to chemically cure the adhesive with a phenol formaldehyde resin and heat as disclosed in U.S.P. 3,625,752. However, this procedure is undesirable because it is a very energy intensive process to heat the adhesive. Also, this process cannot be used for curing pressure sensitive tapes because the plastic backing film would melt at the temperature required for curing. A more energy efficient process is the radiation cure disclosed in U.S.P. 2,956,904. The compositions disclosed therein, however, do not contain a supplemental crosslink promoting ingredient and therefore higher radiation doses are required.

In accordance with the present invention an adhesive composition with improved service temperature and good solvent resistance is provided, which composition comprises:

(a) 100 parts by weight of a block copolymer component comprising an A' B' block copolymer and a multiblock copolymer having at least two end blocks A and at least one mid block B wherein the A' and A blocks are monoalkenyl arene polymer blocks and the B' and B blocks are selectively hydrogenated conjugated diene polymer blocks;

(b) from 25 to 250 parts by weight of an adhesion promoting resin compatible with block B; and

(c) from 1 to 50 parts by weight of a di-, tri-, or tetrafunctional ester of acrylic or methacrylic acid and an at least dihydric aliphatic alcohol, the composition having been cured by radiation.

The term "block copolymer component" comprises the combination of a multiblock copolymer, as hereinafter defined, and an A'B' two block copolymer. The weight ratio of the multiblock copolymer to the A'B' two block copolymer is from 100:1 to 10:90, preferably from 80:20 to 95:5.

The multiblock copolymers employed in the present invention may have a variety of geometrical structures, since the invention does not depend on any specific geometrical structure, but rather upon the chemical constitution of each of the polymer blocks. Thus, the structures may be linear, radial or branched so long as each multiblock copolymer has at least two polymer end blocks A and at least one polymer mid block B as defined above. Methods for the preparation of such polymers are known in the art. Particular reference is made to the use of lithium based catalysts and especially lithium-alkyls for the preparation of the precursor polymers (polymers before hydrogenation). U.S. Pat. No. 3,595,942 not only describes some of the copolymers used in this invention but also describes suitable methods for their hydrogenation. The structure of the polymers is determined by their methods of polymerization. For example, linear polymers result by sequential introduction of the desired monomers into the reaction vessel when using such initiators as lithium-alkyls or dilithiostilbene and the like, or by coupling a two segment block copolymer with a difunctional coupling agent. Branched structures, on the other hand, may be obtained by the use of suitable coupling agents having a functionality with respect to the precursor polymers of three or more. Coupling may be effected with coupling agents such as mono or dihaloalkanes or -alkenes and divinyl benzenes as well as certain polar compounds such as silicon halides, siloxanes or esters of monohydric alcohols with carboxylic acids. The invention applies especially to the use of selectively hydrogenated polymers having the linear configuration before hydrogenation of the following typical species:

polystyrene-polybutadiene-polystyrene (SBS)
polystyrene-polyisoprene-polystyrene (SIS)
poly(alpha-methylstyrene)-polybutadiene-poly-
(alpha-methylstyrene) and
poly(alpha-methylstyrene)-polyisoprene-poly-
(alpha-methylstyrene)

It will be understood that both blocks A and B may be either homopolymer or random copolymer blocks as long as each block predominates in at least one class of the monomers characterizing the blocks and as long as the A blocks individually predominate in monoalkenyl arenes and the B blocks individually predominate in dienes. The term "monoalkenyl arene" includes especially styrene and its analogs and homologs including alpha-methylstyrene and ring-substituted styrenes, particularly ring-methylated styrenes. The preferred monoalkenyl arenes are styrene and alpha-methylstyrene, and styrene is particularly preferred. The blocks B may comprise homopolymers of butadiene or isoprene and copolymers of one of these two dienes with a monoalkenyl arene as long as the blocks B predominate in conjugated diene units. When the monomer employed is butadiene, it is preferred that between about 35 and about 55 mol percent of the condensed butadiene units in the butadiene polymer block have 1,2 configuration. Thus, when such a block is hydrogenated, the resulting product is, of resembles, a regular copolymer block of ethylene and butene-1 (EB). If the conjugated diene employed is isoprene, the resulting product is, or resembles, a regular resembles a regular copolymer block of ethylene and propylene (EP).

Hydrogenation of the precursor block copolymers is preferably effected by use of a catalyst comprising the reaction products of an aluminium alkyl compound with nickel or cobalt carboxylates or alkoxides. The terms "selectively hydrogenated" refers to products wherein at least 80% of the aliphatic double bonds and less than 25% of the alkenyl arene aromatic double bonds have been hydrogenated. Preferred block copolymers are those wherein at least 99% of the aliphatic double bonds and less than 5% of the aromatic double bonds have been hydrogenated.

The average molecular weights of the individual blocks may vary within certain limits. In most instances, the monoalkenyl arene blocks will have number average molecular weights in the order of 5,000—125,000, preferably 6,000—60,000 while the conjugated diene blocks either before or after hydrogenation will have average molecular weights in the order of 10,000—300,000, preferably 30,000—150,000. The total average molecular weight of the multiblock copolymer is in the order of 25,000 to 350,000, preferably from 35,000 to 300,000.

The proportion of the monoalkenyl arene blocks should be between 8 and 65% by weight of the multiblock copolymer, preferably between 10 and 30% by weight.

The chemical composition and molecular weight ranges of the A' and B' blocks of the A'B' two block copolymer are the same as the A and B blocks of the multiblock copolymer. The A'B' two block copolymer may be prepared in a separate synthesis process or may be prepared along with the multiblock copolymer by controlling coupling efficiency. The control of coupling efficiency is disclosed in U.S. Patent No. 4,096,203. The A'B' two block copolymer effects a reduction of the overall viscosity of the adhesive composition as well as improved tack.

The block copolymer by itself lacks the required adhesion. Therefore, it is necessary to add an adhesion promoting or tackifying resin that is compatible with the elastomeric conjugated diene block. A common tackifying resin is a diene-olefin copolymer of piperylene and 2-methyl - 2 - butene having a softening point of about 95°C; this resin is available commercially under the tradename Wingtack 95, and is prepared by the cationic polymerization of 60% piperylene, 10% isoprene, 5% cyclopentadiene, 15% 2-methyl butene and about 10% dimer, as disclosed in U.S.P. 3,577,398. Other tackifying resins of the same general type may be employed in which the resinous copolymer comprises 20—80 weight percent of piperylene and 80—20 weight percent of 2 - methyl - 2 - butene. The resins normally have softening points (ring and ball) between about 80°C and about 115°C. Other adhesion promoting resins which may be employed include hydrogenated resins, esters of rosins, polyterpenes, terpenephenol resins, and, polymerized mixed olefins. For best UV resistance it is preferred that the tackifying resin be a saturated resin, e.g. the hydrogenated dicyclopentadiene polymer resin sold under the trade designation "Escorez-5380".

The amount of tackifying resin employed varies from 25 to 200, preferably between 50 to 150 parts by weight per 100 parts of block copolymer component.

The adhesive compositions of the invention also may contain plasticizers such as rubber extending or compounding oils or liquid resins. These rubber compounding oils are well-known in the art and include both high saturates content and high aromatics content oils. The amount of rubber compounding oil employed varies from 0 to 100, preferably from 10 to 60 parts by weight per 100 parts of block copolymer component.

An essential component of the present invention is the acrylate or methacrylate ester coupling agent which promotes cross-linking of the block copolymers during exposure to the radiation. The coupling agents employed herein are di-, tri-, and tetra-functional acrylic and methacrylic esters of an at least dihydric aliphatic alcohol.

Preferred esters are at least tri-functional esters of an at least trihydric alcohol. Of this group the tetracrylic or tetramethacrylic esters of pentaerythritol and the triacrylic or trimethacrylic esters of trimethylolpropane are particularly preferred. The best results are obtained with trimethylolpropane trimethacrylate.

Other suitable esters are diesters derived from di-, tri-, tetra- or polyethylene glycol, 1,6-hexanediol, 1,4-butanediol, bisphenol A, ethoxylated bisphenol A, and 1,3 - (2,2 - dimethyl) - propanediol.

The amount of coupling agent employed varies from 1 to 50, preferably from 2 to 25 parts by weight per 100 parts of blockcopolymer component.

The compositions of this invention may be modified with supplementary materials including pigments and fillers, as well as stabilizers and oxidation inhibitors.

The adhesive compositions of the present invention may be applied to the substrate from a solution of up to about 40% weight solids of the ingredients in a solvent such as toluene, the solvent being removed by evaporation prior to curing by exposure to the radiation. Alternatively, the ingredients may be mixed in a solvent, the mixture may be emulsified and the solvent evaporated, and the adhesive may be applied to the substrate as a 60—70% weight solids water-based emulsion, the water being removed by evaporation prior to curing. Adhesives of the present invention are especially suited for preparation as hot melt adhesives.

The compositions of the present invention have been cured by exposure to high energy radiation such as electron beam radiation or ultraviolet radiation, with electron beam being particularly preferred.

The electron beam radiation or high energy ionizing radiation which is employed to effect the cross-linking reaction can be obtained from any suitable source such as an atomic pile, a resonant transformer accelerator, a Van de Graaff electron accelerator, an electron accelerator, a betatron, a synchrotron, or a cyclotron. Radiation from these sources will produce ionizing radiation such as electrons, protons, neutrons, deuterons, gamma rays, X rays, alpha particles, and beta particles.

The curing reaction is conveniently effected at room temperature, but it can be conducted at lower or higher temperatures if so desired. Preferably, the curing is effected in an inert atmosphere to reduce oxidative degradation of the block copolymer.

The amount of radiation required depends primarily upon the type and concentration of acrylate or methacrylate ester employed and the level of curing desired. Suitable doses of electron beam radiation include 1 Mrad to 20 Mrads, preferably 2 Mrads to 10 Mrads. Suitable UV radiation doses are those received by a 0.04 mm thick adhesive passing under a medium pressure mercury lamp rated at 200 watts per 2.5 cm at line speeds of 3 to 24 m per minute, the preferred range being 7.5 to 12 m per minute.

When using ultraviolet radiation it is preferred to employ a photosensitizer in order to speed up the curing reaction. useful photosensitizers are benzophenone, propiophenone, cyclopropyl phenyl ketone, acetophenone, 1.3.5-triacetyl benzene, benzaldehyde, thioxanthane, anthraquinone, beta-naphthyl phenyl ketone, beta-naphthaldehyde, beta-acetonaphthone, 2.3-pentanedione, benzil, fluoronone, pyrene, benzanthrone, and anthracene. While most of these are well-known photosensitizers, other photosensitizers would work equally well in the present invention.

A preferred use of the present formulation is in the preparation of pressure-sensitive adhesive tapes or in the manufacture of labels. The pressure-sensitive adhesive tape comprises a flexible backing sheet and a layer of the adhesive composition of the present invention coated on one major surface of the backing sheet. The backing sheet may be a plastic film, paper or any other suitable material and the tape may include various other layers or coatings, such as primers, release coatings and the like, which are used in the manufacture of pressure-sensitive adhesive tapes.

The invention is further illustrated by means of the following Examples.

In these Examples the high temperature cohesive strength of the irradiated adhesive compositions was measured by a Strippability Temperature Limit (STL) test. STL is defined as the maximum temperature at which a tape can be rapidly peeled from a hot, stainless steel substrate without leaving an adhesive residue on the panel. The test is run by applying a 6 mm wide strip of tape to a stainless steel panel whose temperature is controlled to give a temperature gradient of about 6.5°C per cm between 37 and 230°C. Following a 30 second warm-up, the tape is stripped off manually at high speed and at approximately a 90° angle. The temperature at which cohesive failure occurs is recorded as the STL value. The STL test measures whether an automotive masking tape can be removed cleanly when it is stripped from a painted car as it leaves the paint baking ovens.

Gel refers to the appearance of the rubber in the adhesive after about 6.25 cm$^2$ of tape has soaked in toluene for about 24 hours. If the adhesive is not chemically crosslinked, it will dissolve and there will be no gel. If it is only lightly crosslinked, it will not completely dissolve and a rather loose gel structure will be found. If the adhesive is properly crosslinked the rubber will be tightly gelled. Hence the gel ratings are shown as none (N), loose (L) or tight (T).

Holding power (HP) is shown as time, in seconds, required for a 12×12 mm section of tape adhered to steel to fall under a load of 2 kg.

In all examples, the adhesive composition was prepared in a toluene solution and applied as about a 0.04 mm dry adhesive layer to a 0.025 mm thermoplastic film substrate. Electron beam irradiation was accomplished under a nitrogen blanket using a 450 mm wide Electrocurtain Processor manufactured by Energy Sciences, Inc.

The adhesive compositions used in Examples 1—4 are shown in parts by weight in Table I. The selectively hydrogenated linear multiblock polystyrene - polybutadiene - polystyrene was prepared by using phenylbenzoate as coupling agent and has block molecular weights of 6,300—72,000—6,300. At least 98% of the aliphatic double bonds were hydrogenated and less than 2% of the aromatic double bonds. The two block copolymer constitutes the uncoupled hydrogenated polymer produced in the synthesis of the multiblock block and therefore, has block molecular weights of 6,300—36,000. The tackifying resin employed was Escorez 5380 resin, a hydrogenated dicyclopentadiene polymer. Zinc dibutyldithiocarbamate (ZDBC) was employed as an antioxidant. The crosslinking agent was trimethylolpropane trimethacrylate (TMPTM).

## Claims

1. An adhesive composition comprising: 100 parts by weight of a block copolymer component comprising a multiblock copolymer having at least two end blocks A and at least one mid block B wherein the A blocks are monoalkenyl arene polymer blocks and the B block is a conjugated diene polymer block and from 1—50 parts by weight of an unsaturated polymerizable agent, which composition has been cured by radiation, characterized in that, 1° the block copolymer additionally comprises an A'B' block copolymer wherein the A' block is a monoalkenyl arene polymer block and the B' block is a conjugated diene polymer block, 2° and A'B' block copolymer and the multiblock copolymer are selectively hydrogenated, 3° the composition also comprises from 25 to 250 parts by weight of a tackifying resin compatible with block B and 4° the unsaturated polymerizable agent is a di-, tri-, or tetra-functional ester of acrylic or methacrylic acid and an at least dihydric aliphatic alcohol.

2. A composition as claimed in claim 1, wherein the A'B' block copolymer is a selectively hydrogenated polystyrene-polybutadiene block copolymer.

3. A composition as claimed in any one of claims 1—2, wherein the multiblock copolymer is a selectively hydrogenated linear polystyrene/polybutadiene/polystyrene block copolymer.

4. A composition as claimed in any one of claims 1—3, in which the weight ratio of multiblock copolymer to A'B' block copolymer is from 80:20 to 95:5.

5. A composition as claimed in any one of claims 1—4, wherein the ester is an at least trifunctional ester of an at least trihydric alcohol.

6. A composition as claimed in claim 5, wherein the ester is the tri-methacrylic ester of trimethylol propane.

TABLE I

| Example | 1 | 2 | 3 | 4 |
|---|---|---|---|---|
| Multiblock copolymer | 93 | 93 | 93 | 93 |
| Two block copolymer | 7 | 7 | 7 | 7 |
| Tackifying resin | 80 | 80 | 80 | 80 |
| ZDBC | 2 | 2 | 2 | 2 |
| TMPTM | 0 | 3 | 10 | 25 |

The test results are presented in Table II.

TABLE II

| Radiation Dose, Mrad | Property | 1 | 2 | 3 | 4 |
|---|---|---|---|---|---|
| 0 | STL | 315 | | | |
| | HP | >4000 | | | |
| 2 | STL | | | | 335 |
| | Gel | N | N | N | L |
| 5 | Initial STL | | | 310 | 315 |
| | STL | 300 | 310 | 340 | >400 |
| | Gel | N | N | N | T |
| | HP | | | | >4000 |
| 10 | Initial STL | | | 290 | 340 |
| | STL | 280 | 300 | >400 | >400 |
| | Gel | N | N | T | T |
| | HP | | | >4000 | >4000 |

## Revendications

1. Une composition adhésive comprenant 100 parties en poids d'un constituant copolymère séquencé comprenant un copolymère à blocks multiples ayant au moins deux blocs terminaux A et au moins un block intermédiaire B, où les blocs A sont des blocs de polymère de monoalcényl arène et le block B est un bloc de polymère de diène conjugué et de 1 à 50 parties en poids d'un agent polymérisable non saturé, cette composition ayant été durcie par irradiation, caractérisée en ce que: 1°/le copolymère séquencé comprend en outre un copolymère séquencé A'B' dans lequel le bloc A' est un bloc de polymère de monoalcényl arène et le bloc B' est un bloc de polymère de diène conjugué; 2°/le copolymère séquencé A'B' et le copolymère à blocs multiples sont sélectivement hydrogénés; 3./ la composition comprend aussi de 25 à 250 parties en poids d'une résine favorisant l'adhésion compatible avec le bloc B; et 4° l'agent polymérisable non saturé est un ester di-, tri- ou tétra-fonctionnel d'acide acrylique ou méthacrylique et d'un alcool aliphatique au moins dihydrique.

2. Une composition selon la revendication 1, dans laquelle le copolymère séquencé A'B' est un copolymère polystyrène-polybutadiène sélectivement hydrogéné.

3. Une composition selon l'une quelconque des revendications 1 et 2, dans laquelle le copolymère à blocs multiples est un copolymère séquencé polystyrène/polybutadiène/polystyrène sélectivement hydrogéné.

4. Une composition selon l'une quelconque des revendications 1 à 3, dans laquelle le rapport en poids du copolymère à blocs multiples au copolymère séquencé A'B' est compris entre 80:20 et 95:5.

5. Une composition selon l'une quelconque des revendications 1 à 4, dans laquelle l'ester est un ester au moins trifonctionnel d'un alcool au moins trihydrique.

6. Une composition selon la revendication 5, dans laquelle l'ester est l'ester tri-méthacrylique de triméthylolpropane.

## Patentansprüche

1. Haftfähige Zusammensetzung, enthaltend 100 Gew.-Teile einer Blockcopolymer-Komponente, umfassend ein Multiblockcopolymer mit mindestens zwei Endblöcken A und mindestens einem Mittelblock B, worin die Blöcke A Monoalkenylaren-Polymerblöcke sind und der Block B ein konjugiertes Dien-Polymerblock ist, und von 1 bis 50 Gew.-Teile eines ungesättigten polymerisierbaren Mittels, welche Zusammensetzung durch Strahlung gehärtet ist, dadurch gekennzeichnet, daß 1.) das Blockcopolymer zusätzlich ein A'B'-Blockcopolymer enthält, worin der Block A' ein Monoalkenylaren-Polymerblock ist und der Block B' ein konjugiertes Dien-Polymerblock ist, 2.) das A'B'-Blockcopolymer und das Multiblockcopolymer selektiv hydriert sind, 3.) die Zusammensetzung zusätzlich 25 bis 250 Gew.-Teile eines mit Block B verträglichen klebrigmachenden Harzes enthält und 4.) das ungesättigte polymerisierbare Mittel ein di-, tri- oder tetrafunktioneller Ester der Acryl- oder Methacrylsäure mit einem mindestens zweiwertigen aliphatischen Alkohol ist.

2. Zusammensetzung nach Anspruch 1, dadurch gekennzeichnet, daß das A'B'-Blockcopolymer ein selektiv hydriertes Polystyrol-Polybutadien-Blockcopolymer ist.

3. Zusammensetzung nach Anspruch 1 oder 2, dadurch gekennzeichnet, daß das Multiblockcopolymer ein selektiv hydriertes lineares Polystyrol/Polybutadien/Polystyrol - Blockcopolymer ist.

4. Zusammensetzung nach einem der Ansprüche 1 bis 3, dadurch gekennzeichnet, daß das Gewichtsverhältniz des Multiblockcopolymers zum A'B'-Blockcopolymer von 80:20 bis 95:5 beträgt.

5. Zusammensetzung nach einem der Ansprüche 1 bis 4, dadurch gekennzeichnet, daß der Ester ein wenigstens trifunktioneller Ester eines wenigstens dreiwertigen Alkohols ist.

6. Zusammensetzung nach Anspruch 5, dadurch gekennzeichnet, daß der Ester der Trimethacrylsäureester von Trimethylolpropan ist.